# EUROPÄISCHE PATENTSCHRIFT

(11) **EP 2 696 798 B1**
(45) Veröffentlichungstag und Bekanntmachung des Hinweises auf die Patenterteilung: **28.12.2016**
(21) Anmeldenummer: 12715050.6
(22) Anmeldetag: 10.04.2012
(51) Int. Cl.: A61C 8/00, A61C 13/00

(54) **VERFAHREN ZUR AUSBILDUNG EINES AN MINDESTENS EINEM IMPLANTAT ZU HALTERNDEN ZAHNPROTHETISCHEN GERÜSTES SOWIE EIN DERARTIGES ZAHNPROTHETISCHES GERÜST**
METHOD FOR FORMING A PROSTHETIC TOOTH FRAMEWORK TO BE MOUNTED ON AT LEAST ONE IMPLANT, AND SUCH A PROSTHETIC TOOTH FRAMEWORK
PROCÉDÉ DE FORMATION D'UNE ARMATURE DE PROTHÈSE DENTAIRE À FIXER SUR AU MOINS UN IMPLANT ET ARMATURE DE PROTHÈSE DENTAIRE DE CE TYPE

(30) Priorität: 13.04.2011 DE 102011007282
(43) Veröffentlichungstag der Anmeldung: 19.02.2014
(73) Patentinhaber: Rübeling, Günter, 27850 Bremerhaven (DE)
(72) Erfinder: ELLMANN, Daniel, 15370 Fredersdorf-Vogelsdorf (DE)
(74) Vertreter: Eisenführ Speiser
(86) Internationale Anmeldenummer: PCT/EP2012/056402
(87) Internationale Veröffentlichungsnummer: WO 2012/139989

(56) Entgegenhaltungen:
- EP-B1- 0 225 513
- EP-B1- 0 498 923
- EP-B1- 0 666 062
- DE-A1- 4 138 803
- DE-A1- 19 524 221
- DE-C1- 4 402 511
- US-A- 5 057 017

## Beschreibung

Die Erfindung betrifft ein Verfahren zur Ausbildung eines an mindestens einem Implantat, insbesondere an mindestens zwei Implantaten, zu halternden zahnprothetischen Gerüstes sowie ein derartiges zahnprothetisches Gerüst mit einem Körper und einem am Körper vorgesehenen Haltemittel zur Halterung des Körpers am freiliegenden Kopf mindestens eines Implantates im Kiefer des Patienten.

Wichtig ist es bei einem Verfahren der eingangs genannten Art, die Befestigung eines zahnprothetischen Gerüstes insbesondere an zwei oder mehr Implantaten so vorzunehmen, dass Spannungen im Gerüst und in der darauf sitzenden Suprastruktur vermieden werden. Denn ansonsten treten Druck- und Zugbelastungen auf, die sich wiederum auf die osseointegrierten Implantate auswirken und zwangsläufig zum Abbau von wichtiger Knochensubstanz führen, wodurch langfristig stets mit dem Verlust eines oder mehrere Implantate zu rechnen ist.

Deshalb ist aus der DE 44 02 511 A1 ein Verfahren bekannt, mit dem es möglich ist, einen spannungsfreien Sitz zwischen Implantaten und dem daran zu befestigenden zahnprothetischen Gerüst herzustellen. Um eine solche spalt- und spannungsfreie Passung des zahnprothetischen Gerüstes auf den Implantaten zu erzielen, wird bei diesem bekannten Verfahren das zahnprothetische Gerüst auf Implantatelektroden aus Metall auferodiert, die zuvor in einer zugehörigen Modellhülse befestigt worden sind, welche im Modell des Kiefers an einer Stelle angeordnet worden ist, die der Position des Implantates im Kiefer des Patienten entspricht. Die Implantatelektroden sind so geformt, dass ihr Kopf dem Kopf des jeweils zugehörigen Implantates im Wesentlichen entspricht. Üblicherweise werden gesonderte Implantatelektroden verwendet, durch die die zuvor in die Modellhülsen eingesetzten Modellimplantate ausgetauscht werden, um eine Beschädigung der Modellimplantate durch den Erodiervorgang zu vermeiden. Durch die Möglichkeit, die Implantatelektroden während Unterbrechungen des Erodiervorganges in der Modellhülse auszutauschen, können diese nach Bedarf so lange gewechselt werden, bis eine absolut spannungsfreie Passung zwischen den Implantaten und den zahnprothetischen Gerüsten entsteht und die Implantatelektroden keinen Abbrand mehr aufweisen. Nach dem Erodiervorgang kann die Überprüfung auf in die Modellhülse eingeschraubten Modellimplantaten vorgenommen werden. Bei diesem bekannten Verfahren ist es erforderlich, dass für die Funkenerosion das zahnprothetische Gerüst aus Metall besteht, da es als eine der beiden Elektroden der Funkenerosionseinrichtung verwendet wird. Als Haltemittel zur Halterung am zugehörigen Implantat im Kiefer des Patienten wird bei diesem bekannten Verfahren am zahnprothetischen Gerüst ein mit dessen übrigen Körper einstückiger Abschnitt vorgesehen, der bevorzugt als Aussparung in das zahnprothetische Gerüst eingearbeitet wird.

Mittlerweile wächst der Bedarf an der Verwendung von implantatgetragenen Strukturen aus Zirkoniumdioxid und anderen nichtleitenden Materialien. Gerade Zirkoniumdioxid hat den Vorteil einer hohen Ästhetik, weswegen der Einsatz dieses Materials immer beliebter wird. Da sich dieses Material wie auch andere nichtleitende Materialien durch geringe Biegefestigkeit auszeichnet, ist bei der Montage auf eine besonders formschlüssige Verbindung zu achten.

Es ist Aufgabe der vorliegenden Erfindung, das eingangs genannte Verfahren derart zu verbessern, dass auch bei Verwendung von nichtleitenden Materialien zum Aufbau eines zahnprothetischen Gerüstes ein im Wesentlichen spannungsfreier Sitz zwischen dem mindestens einen Implantat und dem darauf zu befestigenden zahnprothetischen Gerüst erzielbar ist.

Gemäß einem ersten Aspekt der vorliegenden Erfindung wird diese Aufgabe gelöst mit einem Verfahren zur Ausbildung eines an mindestens einem Implantat, insbesondere an mindestens zwei Implantaten, zu halternden zahnprothetischen Gerüstes, mit den Schritten
- den Körper eines zahnprothetischen Gerüstes aus elektrisch nichtleitendem Material herzustellen,
- am Körper des zahnprothetischen Gerüstes ein Halteelement zu befestigen, das aus elektrisch leitendem Material besteht und zur Halterung des Körpers des zahnprothetischen Gerüstes am freiliegenden Kopf des mindestens einen Implantates im Kiefer des Patienten vorgesehen ist,
- an eine Funkenerosionseinrichtung eine Implantatelektrode aus leitendem Material, dessen Kopf dem Kopf eines zur Halterung des zahnprothetischen Gerüstes vorgesehenen Implantates im Wesentlichen entspricht, einerseits und das Halteelement andererseits derart anzuschließen, dass die Implantatelektrode die eine Elektrode und das Halteelement am Körper des zahnprothetischen Gerüstes die andere Elektrode bildet, und
- das zahnprothetische Gerüst und die Implantatelektrode aufeinanderzu zu bewegen und dabei das Halteelement am Körper des zahnprothetischen Gerüstes so zu erodieren, dass es an den Kopf des Implantates im Wesentlichen angepasst wird.

Ferner wird zur Lösung der Aufgabe gemäß einem zweiten Aspekt der vorliegenden Erfindung ein zahnprothetisches Gerüst, welches mithilfe eines Verfahrens gemäß dem ersten Aspekt hergestellt ist, mit einem Körper und einem am Körper vorgesehenen Haltemittel zur Halterung des Körpers am freiliegenden Kopf mindestens eines Implantates, insbesondere von mindestens zwei Implantaten, im Kiefer des Patienten vorgeschlagen, wobei der Körper aus elektrisch nichtleitendem Material hergestellt ist und das Haltemittel ein aus elektrisch leitendem Material bestehendes Halteelement ist, das am Körper befestigt ist.

Mithilfe der Erfindung ist es nun erstmals möglich, unter Anwendung der Funkenerosionstechnologie einen passivierten und somit spannungsfreien Sitz zwischen Implantaten und einem daran zu befestigenden zahnprothetischen Gerüst herzustellen, dessen Körper elektrisch nichtleitendes Material wie insbesondere Zirkoniumdioxid aufweist oder aus einem solchen Material besteht. Dies wird erfindungsgemäß durch die Verwendung eines zusätzlichen, aus elektrisch leitendem Material bestehenden Halteelementes erreicht, das am Körper des zahnprothetischen Gerüstes befestigt und durch Funkenerosion entsprechend bearbeitet wird. Demnach bildet die Implantatelektrode die eine Elektrode und das Halteelement am Körper des zahnprothetischen Gerüstes die andere Elektrode und erlaubt somit die erfindungsgemäße Lösung die Verwendung der aus dem zuvor erwähnten Stand der Technik bekannten Funkenerosionstechnologie für zahnprothetische Gerüste aus Zirkoniumdioxid und/oder anderen elektrisch nichtleitenden Materialien.

Bevorzugte Ausführungen und Weiterbildungen der Erfindung sind in den abhängigen Ansprüchen angegeben.

So erfolgt bevorzugt die Befestigung des Halteelementes am Körper des zahnprothetischen Gerüstes mittels Verkleben, wodurch sich eine einfache und zugleich wirkungsvolle Befestigung ergibt.

Bei einer weiteren bevorzugten Ausführung der Erfindung besteht das Halteelement aus einer Hülse und wird im Körper des zahnprothetischen Gerüstes eine Aussparung ausgebildet, in die die Hülse so eingesetzt wird, dass während des Erodiervorganges der Kopf der Implantatelektrode in Berührung mit einem offenen stirnseitigen Ende der Hülse gelangt und zumindest mit einem Abschnitt in dieses offene Ende der Hülse eindringt. Die Verwendung einer Hülse als Halteelement stellt eine konstruktiv besonders zweckmäßige und zugleich einfache Lösung zur Befestigung an stiftförmigen Implantaten dar. Im Falle einer Befestigung durch Verkleben sollte zweckmäßigerweise die als Halteelement vorgesehene Hülse unter Berücksichtigung des hierfür benötigten Klebespaltes konstruiert werden.

Bei einer Weiterbildung der zuvor genannten bevorzugten Ausführung wird die Aussparung im Körper des zahnprothetischen Gerüstes als Durchgangsbohrung ausgebildet und an das andere stirnseitige Ende der Hülse eine andere Elektrode der Funkenerosionseinrichtung angeschlossen. Bevorzugt weist diese andere Elektrode ein Spülröhrchen auf, das mit seinem einen offenen Ende lösbar mit dem anderen offenen stirnseitigen Ende der Hülse verbunden und an eine Spüleinrichtung angeschlossen wird, die während des Erodiervorganges eine, insbesondere dielektrische, Spülflüssigkeit durch die Hülse leitet. Dadurch ergibt sich eine optimale Spülung während der Funkenerosion direkt durch den Körper des zahnprothetischen Gerüstes. Zweckmäßigerweise kann die lösbare Verbindung des einen offenen Endes des Spülröhrchens mit dem anderen Ende der Hülse durch Verschrauben erfolgen, wodurch ein besonders guter Stromfluss und eine besonders einfache Spanentfernung während der Funkenerosion gewährleistet wird.

Zweckmäßigerweise kann mindestens von einem das mindestens eine Implantat enthaltenden Abschnitt eines Kiefers eines Patienten ein Modell gebildet und das zahnprothetische Gerüst anhand dieses Modells hergestellt werden. In einem solchen Modell sollte mindestens eine Modellhülse aus elektrisch leitendem Material an einer Stelle, die der Position des mindestens einen Implantates im Kiefer des Patienten entspricht, angeordnet und eine Implantatelektrode in der Modellhülse lösbar befestigt werden. Dabei sollte bevorzugt allerdings die Befestigung der aus elektrisch leitendem Material bestehenden Halteelemente am Körper des zahnprothetischen Gerüstes nicht auf dem Modell erfolgen, da aufgrund von eventuell divergent stehenden Implantaten das zahnprothetische Gerüst am Modell verkeilen und dadurch ein Abheben des zahnprothetischen Gerüstes vom Modell unmöglich werden kann.

Bevorzugt sollte mindestens ein das mindestens eine Implantat enthaltender Abschnitt eines Kiefers eines Patienten abgetastet und aufgrund des Ergebnisses dieser Abtastung das zahnprothetische Gerüst hergestellt werden. Diese Abtastung kann bevorzugt am Modell stattfinden, indem auf den Modellimplantaten Abtastpfosten befestigt und mit deren Hilfe Winkel, Höhe und Rotation der Implantate unter Berücksichtigung hinterlegter Geometriedaten ermittelt werden. Aufgrund dessen wird dann das zahnprothetische Gerüst, insbesondere mithilfe von CAD, konstruiert, wobei die Basisgeometrie der Verbindungsstelle (Implantatebene oder Abutmentebene) in einer hierfür geeigneten und verwendeten Software hinterlegt ist und als sog. Grundgeometrie für die Ausarbeitung der weiteren Geometrie genutzt wird. Diese Vorgänge werden rechnerisch in der Software ausgeführt. Die Konstruktion des zahnprothetischen Gerüstes erfolgt dann unter Berücksichtigung der zahntechnischen Lehre und der Werkstoffeigenschaften, und die Fertigung des zahnprothetischen Gerüstes findet mithilfe numerisch gesteuerter Maschinen statt. Im Falle einer Befestigung durch Verkleben sollte dabei der hierfür benötigte Klebespalt der als Halteelement einzuklebenden Hülse berücksichtigt werden.

Zweckmäßigerweise sollte der Kopf der Implantatelektrode dem Kopf des entsprechenden Implantates unter Berücksichtigung des Funkenspaltes entsprechen, d.h. bei der Dimensionierung des Kopfes der Implantatelektrode ist der Elektrodenabbrand zu berücksichtigen, um gleiche Abmessungen zu erhalten.

Nachfolgend wird ein bevorzugtes Ausführungsbeispiel der vorliegenden Erfindung anhand der beiliegenden Zeichnungen näher erläutert. Es zeigen:
- Fig. 1: im Querschnitt der Körper eines zahnprothetischen Gerüstes,
- Fig. 2: im Querschnitt der Körper des zahnprothetischen Gerüstes von Fig. 1 mit darin eingesetzter Hülse, an deren einem Ende ferner ein Spülröhrchen angeschraubt ist,
- Fig. 3a: im Querschnitt die gleiche Anordnung wie Fig. 2, wobei zusätzlich noch der Endabschnitt einer am anderen Ende des Spülröhrchens angeschlossenen Spülleitung sowie eine kurz vor Berührung mit der Hülse befindliche Implantatelektrode schematisch dargestellt sind,
- Fig. 3b: schematisch unter Einbeziehung der Anordnung von Fig. 3a die für den Funkenerosionsvorgang verwendete Anlage;
- Fig. 3c: eine perspektivische Ansicht mehrerer am zahnprothetischen Gerüst vorgesehenen Anordnungen gemäß Fig. 3a,
- Fig. 4: im Querschnitt das zahnprothetische Gerüst nach Bearbeitung der im Körper des zahnprothetischen Gerüstes sitzenden Hülse durch die Anordnung und Vorrichtung gemäß den Figuren 3a bis 3c und anschließender Entfernung des Spülröhrchens und der daran angeschlossenen Spülleitung sowie der Implantatelektrode, und
- Fig. 5: im Querschnitt das zahnprothetische Gerüst und ein Modellanalog, auf dem das zahnprothetische Gerüst durch Aufschrauben nun befestigt ist.

Für das nachfolgend im Einzelnen beschriebene Ausführungsbeispiel wird zunächst ein Modell in üblicher Weise hergestellt, was nachfolgend aus Gründen der Vollständigkeit kurz beschrieben wird, obwohl das Modell und dessen Herstellung in den Zeichnungen nicht dargestellt sind. Da es das Ziel ist, ein zahnprothetisches Gerüst, bei dem es sich beispielsweise um Kronen, Brücken, Stegkonstruktionen, Prothesen o. dgl. handeln kann, an bereits im Kiefer vorhandenen Implantaten zu befestigen, wird bevorzugt zumindest im Bereich der Implantate vom Kiefer des Patienten ein Abdruck mit vom Hersteller der Implantate vorgeschriebenen Abdruckpfosten genommen. Nach Herstellung des Abdruckes werden auf die darin steckenden Abdruckpfosten Modellhülsen gesteckt oder geschraubt, so dass beim Gießen des Modells im Abdruck die Modellhülsen in das Modell eingegossen werden. Dadurch wird gewährleistet, dass die Modellhülsen an denselben Stellen im Modell angeordnet werden wie die Implantate im Kiefer. Im fertig gestellten Modell werden dann sog. Modellimplantate auf oder teilweise in die Modellhülsen eingesetzt, insbesondere geschraubt. Der Kopf der verwendeten Modellimplantate ist in seiner Form identisch mit dem Kopf des im Kiefer des Patienten entsprechenden Implantates. Wird das gewählte Modellimplantat auf oder in die Modellhülse gesetzt bzw. geschraubt, die ja die Verankerung des Implantates im Kiefer 'simuliert', sind die Modellhülse und das Modellimplantat zu einer Einheit verbunden, wodurch ein positionsgeführter, fixierter Sitz gewährleistet ist.

Auf den Modellimplantaten werden anschließend Abtastpfosten befestigt und mit deren Hilfe Winkel, Höhe und Rotation der im Kiefer des Patienten befindlichen tatsächlichen Implantate unter Berücksichtigung hinterlegter Geometriedaten ermittelt. Aufgrund dessen wird dann das zahnprothetische Gerüst, insbesondere mithilfe von CAD, konstruiert, wobei die Basisgeometrie der Verbindungsstelle (Implantatebene oder Abutmentebene) in einer hierfür geeigneten und verwendeten Software hinterlegt ist und als sog. Grundgeometrie für die Ausarbeitung der weiteren Geometrie genutzt wird. Diese Vorgänge werden rechnerisch durch die erwähnte Software in einer elektronischen Datenverarbeitungsanlage ausgeführt. Die Konstruktion des zahnprothetischen Gerüstes erfolgt dann unter Berücksichtigung der zahntechnischen Lehre und der Werkstoffeigenschaften, und die Fertigung des Körpers des zahnprothetischen Gerüstes findet bevorzugt mithilfe numerisch gesteuerter Maschinen statt.

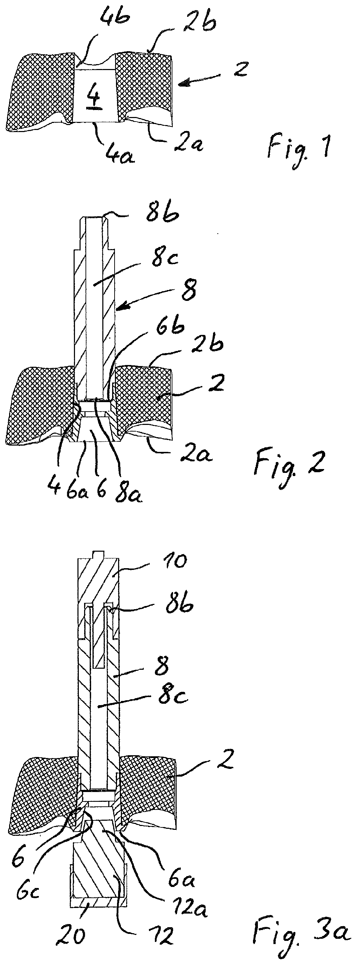

In Fig. 1 ist im Querschnitt ein so hergestellter Körper 2 für ein zahnprothetisches Gerüst dargestellt. Der Körper 2 weist eine in Bezug auf den Kiefer proximale erste Seite 2a, mit der er im später montierten Zustand auf dem Kiefer im Patienten angeordnet wird, und eine in Bezug auf den Kiefer distale zweite Seite 2b auf. Ferner ist in dem in Fig. 1 dargestellten Zustand in den Körper 2 bereits eine Aussparung bzw. ein Durchbruch in Form einer Durchgangsbohrung 4 eingearbeitet, die an der proximalen ersten Seite 2a des Körpers 2 in einer in Bezug auf den Kiefer proximalen ersten Öffnung 4a und an der gegenüberliegenden distalen zweiten Seite 2b des Körpers 2 in einer in Bezug auf den Kiefer distalen zweiten Öffnung 4b endet. Der Körper 2 ist aus einem elektrisch nichtleitenden Material wie insbesondere Zirkoniumdioxid hergestellt.

Um eine spalt- und spannungsfreie Passung des Körpers 2 des zahnprothetischen Gerüstes auf dem zugehörigen Modellimplantat bzw. den zugehörigen Modellimplantaten und somit auf dem im Kiefer befindlichen entsprechenden tatsächlichen Implantat bzw. den im Kiefer befindlichen entsprechenden tatsächlichen Implantaten zu erzielen, muss der Körper 2 auf das Modellimplantat bzw. die Modellimplantate auferodiert werden. Dies wird nachfolgend anhand der Figuren 2 und 3a bis 3c beispielhaft beschrieben.

Zunächst wird eine Hülse 6 in die Durchgangsbohrung 4 des Körpers 2 gesteckt und dort befestigt, was bevorzugt durch Verkleben geschieht. Im Falle einer Befestigung durch Verkleben sollte zweckmäßigerweise die Durchgangsbohrung 4 im Körper 2 und/oder die Hülse 6 unter Berücksichtigung des hierfür benötigten Klebespaltes entsprechend dimensioniert und konstruiert werden. In Fig. 2 ist die Hülse 6 im bereits eingesetzten und befestigten bzw. verklebten Zustand dargestellt und endet wie die Durchgangsbohrung 4 an der proximalen ersten Seite 2a des Körpers 2 mit einer in Bezug auf den Kiefer ebenfalls proximalen ersten Öffnung 6a, während die gegenüberliegende Öffnung der Hülse 6 die in Bezug auf den Kiefer ebenfalls distale zweite Öffnung 6b bildet. In dem in Fig. 2 dargestellten Ausführungsbeispiel ist die Länge der Hülse 6 kürzer als die Länge der Durchgangsbohrung 4, so dass die Hülse 6 mit ihrer distalen zweiten Öffnung 6b innerhalb der Durchgangsbohrung 4 im Abstand von der distalen zweiten Öffnung 4b der Durchgangsbohrung 4 und der distalen zweiten Seite 2b des Körpers 2 endet und somit einen Rücksprung gegenüber der distalen zweiten Seite 2b des Körpers 2 bildet.

Die Hülse 6 ist als Halteelement zur späteren Befestigung am zugehörigen Implantat im Kiefer des Patienten vorgesehen, indem der Kopf des Implantates in Eingriff mit der Innenwandung der Hülse 6 im Bereich deren proximalen ersten Endes 6a gebracht wird, was an späterer Stelle noch näher ausgeführt wird. Zur Passivierung, also zur Erzielung einer spalt- und spannungsfreien Passung mit dem zugehörigen Implantat im Kiefer des Patienten muss die Hülse 6 an ihrer Innenwandung zumindest im Bereich ihrer proximalen ersten Öffnung 6a entsprechend nachbearbeitet werden. Diese Nachbearbeitung findet mithilfe der Funkenerosion statt, so dass die Hülse 6 aus einem elektrisch leitenden Material bestehen muss, welches für den Erodiervorgang entsprechend geeignet ist und zweckmäßigerweise Metall ist.

Ferner lässt Fig. 2 ein Spülröhrchen 8 erkennen, das mit seinem proximalen ersten Ende 8a durch die distale zweite Öffnung 4b der Durchgangsbohrung 4 gesteckt und an die Hülse 6 im Bereich deren distaler zweiter Öffnung 6b angeschlossen ist. Der Anschluss erfolgt bevorzugt durch Verschrauben, indem die Innenwandung der Hülse 6 benachbart zu deren distaler zweiter Öffnung 6b mit einem Innengewinde und das proximale erste Ende 8a des Spülröhrchens 8 mit einem entsprechenden Außengewinde versehen ist, wobei die beiden Gewinde in Fig. 2 nicht näher gekennzeichnet sind. Wie Fig. 2 ferner zeigt, ragt das Spülröhrchen 8 aus der distalen zweiten Öffnung 4b der Durchgangsbohrung 4 heraus und steht mit seinem gegenüberliegenden distalen zweiten Ende 8b von der distalen zweiten Seite 2b des Körpers 2 ab. Das Spülröhrchen 8 enthält einen Hohlraum 8c, der an beiden Enden 8a, 8b offen ist. Das Spülröhrchen 8 dient zur Durchleitung von, insbesondere dielektrischer, Spülflüssigkeit in die Hülse 6 während des Erodiervorganges und ist somit Teil einer Funkenerosionsanlage, die nachfolgend noch näher beschrieben wird.

Hierzu wird, wie Fig. 3a erkennen lässt, an das distale zweite Ende 8b des Spülröhrchens 8 ein Anschlussstück 10 einer Spülleitung angeschlossen, welche ebenfalls Bestandteil der nachfolgend noch näher beschriebenen Funkenerosionsanlage ist.

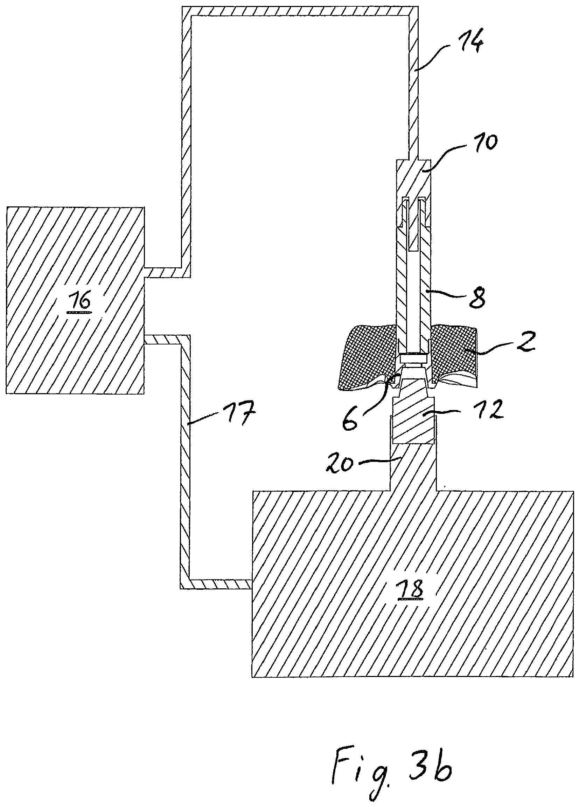

Ferner ist in Fig. 3a schematisch eine Implantatelektrode 12 gezeigt, die benachbart zur proximalen ersten Seite 2a des Körpers 2 angeordnet und so ausgerichtet wird, dass ihr Kopf 12a für den Erodiervorgang in berührenden Eingriff mit der Innenwand 6c der Hülse 6 im Bereich von deren proximaler erster Öffnung 6a bringbar ist. Auch die Implantatelektrode 12 ist Teil einer Funkenerosionsanlage, welche nachfolgend anhand von Fig. 3b näher erläutert wird.

Wie Fig. 3b schematisch erkennen lässt, führt eine erste Spülleitung 14 von deren Anschlussstück 10 zu einer Spüleinrichtung 16 und verbindet eine zweite Spülleitung 17 die Spüleinrichtung 16 mit einem Generator 18 der Funkenerosionsanlage. Der Generator 18 wiederum ist mit der Implantatelektrode 12 über ein Anschlussstück 20 verbunden, das in Fig. 3b nur schematisch dargestellt ist und im dargestellten Ausführungsbeispiel gleichzeitig als Halterung für die Implantatelektrode 12 vorgesehen ist. Die Hülse 6 im Körper 2 des zahnprothetischen Gerüstes bildet die eine Elektrode, beispielsweise die Plus-Elektrode, und ist über das ebenfalls aus elektrisch leitendem Material bestehende Spülröhrchen 8 und das gleichfalls aus elektrisch leitendem Material bestehende Anschlussstück 10 und ein in den Figuren nicht dargestelltes elektrisches Kabel, das entweder separat geführt oder in die Flüssigkeitsleitungen 14, 17 integriert ist, an den Generator 18 angeschlossen. Die elektrische Verbindung der Implantatelektrode 12, bei der es sich beispielsweise um die Minus-Elektrode handeln kann, mit dem Generator 18 erfolgt im dargestellten Ausführungsbeispiel über das Anschlussstück 20. Somit liegt das eine elektrische Potenzial, beispielsweise das Plus-Potenzial, an der Hülse 6 im Körper 2 des zahnprothetischen Gerüstes und das andere elektrische Potenzial, beispielsweise das Minus-Potenzial, an der Implantatelektrode 12 an.

Während des Erodiervorganges findet eine Relativbewegung zwischen der im Körper 2 des zahnprothetischen Gerüstes sitzenden Hülse 6 und der Implantatelektrode 12 aufeinander zu statt. Hierzu sind der Körper 2 des zahnprothetischen Gerüstes und/oder das Spülröhrchen 8 und/oder das Anschlussstück 10 in einer nicht dargestellten Haltevorrichtung eingespannt, welche eine Bewegung in Richtung auf die Implantatelektrode 12 ermöglicht, während die Implantatelektrode 12 stationär angeordnet ist. Alternativ ist es aber auch denkbar, das Anschlussstück 20 so auszubilden, dass die Implantatelektrode 12 in Richtung auf die Hülse 6 bewegbar ist. Im letztgenannten Fall wiederum kann der Körper 2 des zahnprothetischen Gerüstes, das Spülröhrchen 8 und/oder das Anschlussstück 10 stationär gelagert sein.

Findet nun eine Relativbewegung zwischen dem Körper 2 des zahnprothetischen Gerüstes und somit der darin sitzenden Hülse 6 einerseits und der Implantatelektrode 12 andererseits statt, so wird durch Berührung der Implantatelektrode 12 mit der Innenwand der Hülse 6 im Bereich von deren primärer erster Öffnung 6a (Fig. 3a) die Funkenerosion ausgelöst, und es entsteht zwischen dem Kopf 12a der Implantatelektrode 12 und der Hülse 6 ein Funkenspalt. Dabei wird die Hülse 6 im Körper 2 des zahnprothetischen Gerüstes durch die Implantatelektrode 12 so lange erodiert, bis eine absolut spannungsfreie Passung zwischen dem Kopf 12a der Implantatelektrode 12 und der Hülse 6 im Körper 2 des zahnprothetischen Gerüstes entstanden ist und die Implantatelektrode 12 keinen Abbrand mehr aufweist.

Während des zuvor beschriebenen Erodiervorganges fließt Spülflüssigkeit von der Spüleinrichtung 16 über die Leitung 14, deren Anschlussstück 10 in den Hohlraum 8c des Spülröhrchens 8 und von dort durch die Hülse 6 und wird über eine in den Figuren nicht dargestellte Auffangeinrichtung und die Spülleitung 17 zurück zur Spüleinrichtung 16 geleitet, so dass die Spülflüssigkeit im dargestellten Ausführungsbeispiel im Kreis geführt wird. Die Spülflüssigkeit hat im Wesentlichen zwei Funktionen. Zum einen dient sie zum Abtransport von eventuell entstehenden Abbrandresten, und zum anderen hat sie eine kühlende Wirkung unmittelbar auf die Hülse 6 und somit indirekt auch auf den Körper 2 des zahnprothetischen Gerüstes.

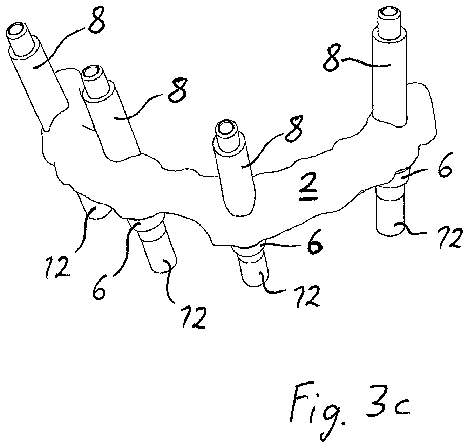

In Fig. 3c ist beispielhaft in perspektivischer Ansicht der Körper 2 eines zahnprothetischen Gerüstes mit vier Anordnungen gemäß Fig. 3a gezeigt, wobei allerdings gegenüber Fig. 3a das Anschlussstück 10 für die Spülleitung weggelassen ist. Bei dem in Fig. 3c dargestellten Ausführungsbeispiel ist demnach das zahnprothetische Gerüst zur Befestigung am Kiefer eines Patienten mithilfe von vier Implantaten vorgesehen.

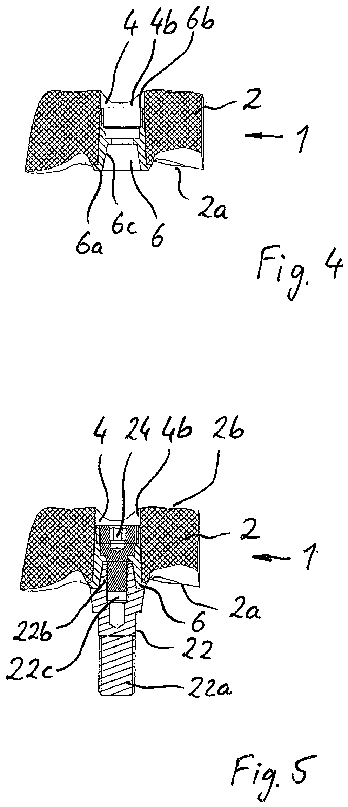

Nach Beendigung des zuvor beschriebenen Erodiervorganges werden das Spülröhrchen 8 mit dem Anschlussstück 10 und der daran endenden Spülleitung 14 sowie die Implantatelektrode 12 entfernt. Zurück bleibt ein nun fertig gestelltes zahnprothetisches Gerüst, das in Fig. 4 gezeigt und mit der Bezugsziffer "1" bezeichnet ist und den Körper 2 aus elektrisch nichtleitendem Material wie insbesondere Zirkoniumdioxid und die darin eingesetzte Hülse 6 aufweist, deren Innenwandung 6c benachbart zu ihrer proximalen ersten Öffnung 6a nun für den gewünschten spalt- und spannungsfreien Passsitz auf dem Kopf des zugeordneten Implantates im Kiefer des Patienten entsprechend angepasst ist, was jedoch in Fig. 4 nicht erkennbar ist.

Fig. 5 zeigt das zahnprothetische Gerüst 1 von Fig. 4 in einem verschraubten Zustand für die Anordnung am Modell. Hierzu wird ein sog. Modellimplantat 22 verwendet, das mit seinem in Bezug auf den Kiefer proximalen Abschnitt 22a im Modell an exakt der gleichen Stelle und in exakt der gleichen Ausrichtung wie das entsprechende tatsächliche Implantat im Kiefer des Patienten sitzt. Am gegenüberliegenden distalen Ende ist das Modellimplantat 22 mit einem Kopf 22b versehen, der hinsichtlich seiner Form exakt dem Kopf des entsprechenden tatsächlichen Implantates sowie dem Kopf 12a der zuvor verwendeten Implantatelektrode 12 (Fig. 3a) gleicht. Der Körper 2 des zahnprothetischen Gerüstes 1 sitzt mit der Hülse 6 auf dem Kopf 22b des Modellimplantats 22 und ist an diesem mithilfe einer Schraube 24 befestigt. Dabei ist die Schraube 24 in die Durchgangsbohrung 4 durch deren distale zweite Öffnung 4b sowie in die Hülse 6 durch deren distale zweite Öffnung und durch die Hülse 6 gesteckt und befindet sich in Schraubeingriff mit dem Innengewinde in einem im Modellimplantat 22 ausgebildeten Sackloch 22c, das zur Hülse 6 und somit zur distalen zweiten Seite 2b des Körpers 2 hin offen ist. Wie Fig. 5 ferner erkennen lässt, stützt sich dabei der Kopf der Schraube 24 an dem Rand der Hülse 6 ab, der deren distale zweite Öffnung 6b (Fig. 4) umgibt.

## Patentansprüche

1. Verfahren zur Ausbildung eines an mindestens einem Implantat, insbesondere an mindestens zwei Implantaten, zu halternden zahnprothetischen Gerüstes, mit den Schritten
- den Körper (2) eines zahnprothetischen Gerüstes (1) aus elektrisch nichtleitendem Material herzustellen,
- am Körper (2) des zahnprothetischen Gerüstes (1) ein Halteelement (6) zu befestigen, das aus elektrisch leitendem Material besteht und zur Halterung des Körpers (2) des zahnprothetischen Gerüstes (1) am freiliegenden Kopf des mindestens einen Implantates im Kiefer des Patienten vorgesehen ist,
- an eine Funkenerosionseinrichtung (18) eine Implantatelektrode (12) aus leitendem Material, deren Kopf (12a) dem Kopf eines zur Halterung des zahnprothetischen Gerüstes (1) vorgesehenen Implantates im Wesentlichen entspricht, einerseits und das Halteelement (6) andererseits derart anzuschließen, dass die Implantatelektrode (12) die eine Elektrode und das Halteelement (6) am Körper (2) des zahnprothetischen Gerüstes (1) die andere Elektrode bildet, und
- das zahnprothetische Gerüst (1) und die Implantatelektrode (12) aufeinanderzu zu bewegen und dabei das Halteelement (6) am Körper (2) des zahnprothetischen Gerüstes (1) so zu erodieren, dass es an den Kopf des Implantates im Wesentlichen angepasst wird.

2. Verfahren nach Anspruch 1, bei welchem das elektrisch nichtleitende Material (2) für den Körper des zahnprothetischen Gerüstes (1) Zirkoniumdioxid aufweist.

3. Verfahren nach Anspruch 1 oder 2, bei welchem die Befestigung des Halteelementes (6) am Körper (2) des zahnprothetischen Gerüstes (1) mittels Verkleben erfolgt.

4. Verfahren nach mindestens einem der vorangegangenen Ansprüche, bei welchem das Halteelement aus einer Hülse (6) besteht und im Körper (2) des zahnprothetischen Gerüstes (1) eine Aussparung (4) ausgebildet wird, in die die Hülse (6) so eingesetzt wird, dass während des Erodiervorganges der Kopf (12a) der Implantatelektrode (12) in Berührung mit einem offenen stirnseitigen Ende (6a) der Hülse (6) gelangt und zumindest mit einem Abschnitt in dieses offene Ende (6a) der Hülse (6) eindringt.

5. Verfahren nach Anspruch 4, bei welchem die Aussparung im Körper (2) des zahnprothetischen Gerüstes (1) als Durchgangsbohrung (4) ausgebildet wird und an das andere stirnseitige Ende (6b) der Hülse (6) eine andere Elektrode (8) der Funkenerosionseinrichtung (18) angeschlossen wird.

6. Verfahren nach Anspruch 5, bei welchem die andere Elektrode ein Spülröhrchen (8) aufweist, das mit seinem einen offenen Ende (8a) lösbar mit dem anderen offenen stirnseitigen Ende (6b) der Hülse (6) verbunden und an eine Spüleinrichtung (16) angeschlossen wird, die während des Erodiervorganges Spülflüssigkeit durch die Hülse (6) leitet.

7. Verfahren nach Anspruch 5 oder 6, bei welchem die lösbare Verbindung des einen offenen Endes (8a) des Spülröhrchens (8) mit dem anderen Ende (6b) der Hülse (6) durch Verschrauben erfolgt.

8. Verfahren nach mindestens einem der vorangegangenen Ansprüche, bei welchem mindestens von einem das mindestens eine Implantat enthaltenden Abschnitt eines Kiefers eines Patienten ein Modell gebildet und das zahnprothetische Gerüst anhand dieses Modells hergestellt wird.

9. Verfahren nach Anspruch 8, bei welchem in dem Modell mindestens eine Modellhülse aus elektrisch leitendem Material an einer Stelle angeordnet wird, die der Position des mindestens einen Implantates im Kiefer des Patienten entspricht, und eine Implantatelektrode in der Modellhülse lösbar befestigt wird.

10. Verfahren nach mindestens einem der vorangegangenen Ansprüche, bei welchem mindestens ein das mindestens eine Implantat enthaltender Abschnitt eines Kiefers eines Patienten abgetastet und aufgrund des Ergebnisses dieser Abtastung das zahnprothetische Gerüst hergestellt wird.

11. Verfahren nach mindestens einem der vorangegangenen Ansprüche, bei welchem der Kopf (12a) der Implantatelektrode (12) dem Kopf des entsprechenden Implantates unter Berücksichtigung des Funkenspaltes entspricht.

12. Zahnprothetisches Gerüst, welches mit Hilfe eines Verfahrens nach mindestens einem der vorangegangenen Ansprüche hergestellt ist, mit einem Körper (2) und einem am Körper (2) vorgesehenen Haltemittel (6) zur Halterung des Körpers (2) am freiliegenden Kopf mindestens eines Implantates, insbesondere von mindestens zwei Implantaten, im Kiefer des Patienten,
**dadurch gekennzeichnet, dass** der Körper (2) aus elektrisch nicht leitendem Material hergestellt ist und das Haltemittel ein aus elektrisch leitendem Material bestehendes Halteelement (6) ist, das am Körper (2) befestigt ist.

13. Zahnprothetisches Gerüst nach Anspruch 12, **dadurch gekennzeichnet, dass** das elektrisch nichtleitende Material für den Körper (2) des zahnprothetischen Gerüstes (1) Zirkoniumdioxid aufweist.

14. Zahnprothetisches Gerüst nach Anspruch 12 oder 13, **dadurch gekennzeichnet, dass** das Halteelement (6) am Körper (2) verklebt ist.

15. Zahnprothetisches Gerüst nach mindestens einem der Ansprüche 12 bis 14, **dadurch gekennzeichnet, dass** das Halteelement aus einer Hülse (6) besteht und im Körper (2) eine Aussparung (4) ausgebildet ist, in die die Hülse (6) eingesetzt ist, so dass während eines Erodiervorganges der Kopf (12a) einer Implantatelektrode (12) in Berührung mit einem offenen stirnseitigen Ende (6a) der Hülse (6) bringbar und zumindest mit einem Abschnitt in dieses offene Ende (6a) der Hülse (6) eindringbar ist.

16. Zahnprothetisches Gerüst nach Anspruch 15, **dadurch gekennzeichnet, dass** die Aussparung im Körper (2) als Durchgangsbohrung (4) ausgebildet und das andere stirnseitige Ende (6b) der Hülse (6) zum Anschluss an eine andere Elektrode (8) einer Funkenerosionseinrichtung (18) für den Erodiervorgang vorgesehen ist.

## Claims

1. Method for forming a prosthetic tooth framework to be mounted on at least one implant, in particular on at least two implants, comprising the steps of:
- producing the body (2) of a prosthetic tooth framework (1) from non-electroconductive material,
- securing onto the body (2) of the prosthetic tooth framework (1) a retaining element (6), which is made from electroconductive material and is provided for mounting the body (2) of the prosthetic tooth framework (1) onto the exposed head of the at least one implant in the jaw of the patient,
- on the one hand attaching an implant electrode (12), which is made from conductive material, the head (12a) of which corresponds substantially to the head of an implant provided for holding the prosthetic tooth framework (1), to a spark erosion device (18) and on the other hand attaching the retaining element (6), in such a way that the implant electrode (12) forms one electrode and the retaining element (6) on the body (2) of the prosthetic tooth framework (1) forms the other electrode and,
- moving the prosthetic tooth framework (1) and the implant electrode (12) towards each other, thereby eroding the retaining element (6) on the body (2) of the prosthetic tooth framework (1) in such a way that it is substantially adapted to the head of the implant.

2. Method according to claim 1, in which the non-electroconductive material (2) for the body of the prosthetic framework (1) comprises zirconium dioxide.

3. Method according to claim 1 or 2, in which the retaining element (6) is secured to the body (2) of the prosthetic framework (1) by means of adhesion.

4. Method according to at least one of the preceding claims, in which the retaining element consists of a sleeve (6) and in the body (2) of the prosthetic framework (1) an opening (4) is formed, into which the sleeve (6) is inserted so that during the erosion process the head (12a) of the implant electrode (12) comes into contact with an open face end (6a) of the sleeve (6) and penetrates with at least one section into said open end (6a) of the sleeve (6).

5. Method according to claim 4, in which the opening is formed in the body (2) of the prosthetic framework (1) as a through bore (4) and at the other face end (6b) of the sleeve (6) another electrode (8) of the spark erosion device (18) is connected.

6. Method according to claim 5, in which the other electrode comprises a rinsing tube (8), which is connected detachably with its one open end (8a) to the other open face end (6b) of the sleeve (6) and is connected to a rinsing device (16), which during the erosion process directs rinsing fluid through the sleeve (6).

7. Method according to claim 5 or 6, in which the detachable connection of the open end (8a) of the rinsing tube (8) to the other end (6b) of the sleeve (6) is a screw connection.

8. Method according to at least one of the preceding claims, in which a model is formed of a section of a jaw of a patient containing at least one implant and the prosthetic framework is produced with reference to this model.

9. Method according to claim 8, in which in the model at least one model sleeve made from electroconductive material is arranged in a position which corresponds to the position of the at least one implant in the jaw of the patient and an implant electrode is secured detachably into the model sleeve.

10. Method according to at least one of the preceding claims, in which at least one section of a jaw of a patient containing at least one implant is scanned and the prosthetic framework is produced from the results of said scan.

11. Method according to at least one of the preceding claims, in which the head (2a) of the implant electrode (12) corresponds to the head of the corresponding implant taking into account the spark gap.

12. Prosthetic framework, which is produced by means of a method according to at least one of the preceding claims, comprising a body (2) and a retaining element (6) provided on the body (2) for supporting the body (2) on the exposed head of at least one implant, in particular of at least two implants, in the jaw of the patient, **characterised in that** the body (2) is made from non-electroconductive material and the holding means is a retaining element (6) made from electroconductive material which is secured onto the body (2).

13. Prosthetic framework according to claim 12, **characterised in that** the non-electroconductive material for the body (2) of the prosthetic framework (1) comprises zirconium dioxide.

14. Prosthetic framework according to claim 12 or 13, **characterised in that** the retaining element (6) is adhered to the body (2).

15. Prosthetic framework according to at least one of claims 12 to 14, **characterised in that** the retaining element consists of a sleeve (6) and in the body (2) an opening (4) is formed into which the sleeve (6) is inserted, so that during an erosion process the head (12a) of an implant electrode (12) can be brought into contact with an open face end (6a) of the sleeve (6) and can be inserted at least in one section into said open end (6a) of the sleeve (6).

16. Prosthetic framework according to claim 15, **characterised in that** the opening in the body (2) is formed as a through bore (4) and the other face end (6b) of the sleeve (6) is provided for connecting to another electrode (8) of a spark erosion device (18) for the erosion process.

## Revendications

1. Procédé servant à réaliser une armature de prothèse dentaire à serrer au niveau au moins d'un implant, en particulier au niveau au moins de deux implants, comprenant les étapes suivantes consistant à
- fabriquer le corps (2) d'une armature (1) de prothèse dentaire à partir d'un matériau non conducteur électriquement,
- fixer au niveau du corps (2) de l'armature (1) de prothèse dentaire un élément de maintien (6), qui est constitué d'un matériau électroconducteur et qui est prévu afin de serrer le corps (2) de l'armature (1) de prothèse dentaire au niveau de la tête dégagée de l'au moins un implant dans la mâchoire du patient,
- raccorder à un dispositif d'électroérosion (18) une électrode d'implant (12) composée d'un matériau conducteur, dont la tête (12a) correspond sensiblement à la tête d'un implant prévu pour serrer l'armature (1) de prothèse dentaire, d'une part et l'élément de maintien (6) d'autre part de telle manière que l'électrode d'implant (12) forme l'une électrode et l'élément de maintien (6) forme au niveau du corps (2) de l'armature (1) de prothèse dentaire, l'autre électrode, et
- déplacer l'une vers l'autre l'armature (1) de prothèse dentaire et l'électrode d'implant (12) et, ce faisant, éroder l'élément de maintien (6) au niveau du corps (2) de l'armature (1) de prothèse dentaire de telle sorte qu'il soit sensiblement adapté à la tête de l'implant.

2. Procédé selon la revendication 1, dans le cadre duquel le matériau (2) non conducteur électriquement présente pour le corps de l'armature (1) de prothèse dentaire du dioxyde de zirconium.

3. Procédé selon la revendication 1 ou 2, dans le cadre duquel la fixation de l'élément de maintien (6) au niveau du corps (2) de l'armature (1) de prothèse dentaire est effectuée au moyen d'un collage.

4. Procédé selon au moins l'une quelconque des revendications précédentes, dans le cadre duquel l'élément de maintien est constitué d'une douille (6) et un évidement (4) est réalisé dans le corps (2) de l'armature (1) de prothèse dentaire, dans lequel évidement la douille (6) est insérée de telle sorte que, au cours de l'opération d'érosion, la tête (12a) de l'électrode d'implant (12) parvient en contact avec une extrémité (6a) ouverte située côté frontal de la douille (6) et s'enfonce, au moins par un tronçon, dans ladite extrémité (6a) ouverte de la douille (6).

5. Procédé selon la revendication 4, dans le cadre duquel l'évidement dans le corps (2) de l'armature (1) de prothèse dentaire est réalisé sous la forme d'un alésage de passage (4) et une autre électrode (8) du système d'électroérosion (18) est raccordée à l'autre extrémité (6b) située côté frontal de la douille (6).

6. Procédé selon la revendication 5, dans le cadre duquel l'autre électrode présente un petit tube de rinçage (8), qui est relié, par l'une de ses extrémités (8a) ouvertes, de manière amovible à l'autre extrémité (6b) ouverte située côté frontal de la douille (6) et qui est raccordé à un système de rinçage (16), qui achemine, au cours de l'opération d'érosion, du liquide de rinçage à travers la douille (6).

7. Procédé selon la revendication 5 ou 6, dans le cadre duquel la liaison amovible de l'une des extrémités (8a) ouvertes du petit tuyau de rinçage (8) à l'autre extrémité (6b) de la douille (6) est effectuée par vissage.

8. Procédé selon au moins l'une quelconque des revendications précédentes, dans le cadre duquel un modèle est formé au moins par un tronçon, contenant l'au moins un implant, d'une mâchoire d'un patient et l'armature de prothèse dentaire est fabriquée à l'aide dudit modèle.

9. Procédé selon la revendication 8, dans le cadre duquel au moins une douille de modèle composée d'un matériau électroconducteur est disposée dans le modèle en un emplacement, qui correspond à la position de l'au moins un implant dans la mâchoire du patient, et une électrode d'implant est fixée de manière amovible dans la douille de modèle.

10. Procédé selon au moins l'une quelconque des revendications précédentes, dans le cadre duquel au moins un tronçon, contenant l'au moins un implant, d'une mâchoire d'un patient est sondé et l'armature de prothèse dentaire est fabriquée sur la base du résultat dudit sondage.

11. Procédé selon au moins l'une quelconque des revendications précédentes, dans le cadre duquel la tête (12a) de l'électrode d'implant (12) correspond à la tête de l'implant correspondant en tenant compte de l'intervalle d'étincelle.

12. Armature de prothèse dentaire, qui est fabriquée à l'aide d'un procédé selon au moins l'une quelconque des revendications précédentes, comprenant un corps (2) et un moyen de maintien (6) prévu au niveau du corps (2) servant à serrer le corps (2) au niveau de la tête dégagée d'au moins un implant, en particulier d'au moins deux implants, dans la mâchoire du patient,
**caractérisée en ce que** le corps (2) est fabriqué à partir d'un matériau non conducteur électriquement, et **en ce que** le moyen de maintien est un élément de maintien (6) constitué d'un matériau électroconducteur, qui est fixé au niveau du corps (2).

13. Armature de prothèse dentaire selon la revendication 12, **caractérisée en ce que** le matériau non conducteur électriquement présente, pour le corps (2) de l'armature (1) de prothèse dentaire, de l'oxyde de zirconium.

14. Armature de prothèse dentaire selon la revendication 12 ou 13, **caractérisée en ce que** l'élément de maintien (6) est collé au niveau du corps (2).

15. Armature de prothèse dentaire selon l'une quelconque des revendications 12 à 14, **caractérisée en ce que** l'élément de maintien est constitué d'une douille (6), et **en ce qu'**un évidement (4) est réalisé dans le corps (2), dans lequel évidement la douille (6) est insérée de telle sorte que, au cours d'une opération d'érosion, la tête (12a) d'une électrode d'implant (12) peut venir en contact avec une extrémité (6a) ouverte située côté frontal de la douille (6) et peut être enfoncée au moins par un tronçon dans ladite extrémité (6a) ouverte de la douille (6).

16. Armature de prothèse dentaire selon la revendication 15, **caractérisée en ce que** l'évidement dans le corps (2) est réalisé sous la forme d'un alésage de passage (4), et **en ce que** l'autre extrémité (6b) située côté frontal de la douille (6) est prévue pour être raccordée à une autre électrode (8) d'un dispositif d'électroérosion (18) pour l'opération d'érosion.
